# EUROPEAN PATENT APPLICATION

(11) **EP 4 823 047 A1**
(43) Date of publication of application: **14.10.2026**
(21) Application number: 23960499.4
(22) Date of filing: 06.12.2023
(51) Int. Cl.: H04L 27/00

(54) **SIGNAL MODULATION METHOD, SIGNAL DEMODULATION METHOD, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Penza, Giancarlo
(86) International application number: PCT/CN2023/136794
(87) International publication number: WO 2025/118186

(57) **Abstract**

Provided are a signal modulation method, a signal demodulation method, and a communication device. The signal modulation method comprises: a first device, on the basis of a first modulation constellation diagram, performing signal modulation, the first modulation constellation diagram being generated on the basis of channel information. That is to say, an appropriate modulation constellation diagram can be generated based on an actual channel environment, rather than being limited to a limited number of modulation constellation diagrams, thereby improving communication system performance.

## Description

### TECHNICAL FIELD

The present disclosure relates to the technical field of communication, and more particularly, to a signal modulation method, a signal demodulation method and a communication device.

### BACKGROUND

Signal modulation is a process of converting information bits into a form suitable for wireless transmission. The number of modulation constellations supported by the related art is relatively small, resulting in limited performance of the communication system.

### SUMMARY

Embodiments of the present disclosure provide a signal modulation method, a signal demodulation method and a communication device. Various aspects of the embodiments of the present disclosure are described in detail below.

In a first aspect, there is provided a signal modulation method. The signal modulation method includes that: a first device performs signal modulation according to a first modulation constellation, the first modulation constellation being generated based on channel information.

In a second aspect, there is provided a signal demodulation method. The signal demodulation method includes that: a second device performs signal demodulation according to a first modulation constellation, the first modulation constellation being generated based on channel information.

In a third aspect, there is provided a communication device, and the communication device is a first device. The communication device includes: a modulation module for performing signal modulation according to a first modulation constellation, the first modulation constellation being generated based on channel information.

In a fourth aspect, there is provided a communication device, and the communication device is a second device. The communication device includes: a demodulation module for performing signal demodulation according to a first modulation constellation, the first modulation constellation being generated based on channel information.

According to a fifth aspect, there is provided a communication device. The communication device includes a transceiver, a memory and a processor. The memory is used to store a program, and the processor is used to call the program in the memory and control the transceiver to receive or send a signal, to cause the communication device to perform the method as described in the first aspect or the second aspect.

According to a sixth aspect, there is provided an apparatus including a processor. The processor is used for calling a program from a memory, to cause the apparatus to perform the method as described in the first aspect or the second aspect.

According to a seventh aspect, there is provided a chip including a processor. The processor is used for calling a program from a memory, to cause a device on which the chip is mounted to perform the method as described in the first aspect or the second aspect.

According to an eighth aspect, there is provided a computer readable storage medium, having stored thereon a program that causes a computer to perform the method as described in the first aspect or the second aspect.

According to a ninth aspect, there is provided a computer program product. The computer program product includes a program that causes a computer to perform the method as described in the first aspect or the second aspect.

According to a tenth aspect, there is provided a computer program, causing a computer to perform the method as described in the first aspect or the second aspect.

The technical solution provided by the embodiments of the present disclosure can generate appropriate modulation constellations based on the actual channel environment, rather than being restricted to a limited number of modulation constellations, thereby improving the performance of the communication system.

### BRIEF DESCRIPTION OF THE DRAWINGS

FIG. 1 is an example diagram of a system architecture of a wireless communication system to which the embodiments of the present disclosure may be applied.
FIG. 2 is an example diagram of a modulation constellation.
FIG. 3 is an example diagram of a communication process based on multiple-input multiple-output (MIMO).
FIG. 4A is a schematic flowchart of a signal modulation method according to an embodiment of the present disclosure.
FIG. 4B is a schematic flowchart of a signal modulation method according to an embodiment of the present disclosure.
FIG. 5 is a schematic diagram of a manner of generating an modulation constellation according to an embodiment of the present disclosure.
FIG. 6 is a schematic diagram of a high-dimensional modulation and demodulation method according to an embodiment of the present disclosure.
FIG. 7A is a schematic diagram of an information indication manner according to an embodiment of the present disclosure.
FIG. 7B is a schematic diagram of another information indication manner according to an embodiment of the present disclosure.
FIG. 8A is a schematic diagram of yet another information indication manner according to an embodiment of the present disclosure.
FIG. 8B is a schematic diagram of yet another information indication manner according to an embodiment of the present disclosure.
FIG. 9A is a schematic diagram of yet another information indication manner according to an embodiment of the present disclosure.
FIG. 9B is a schematic diagram of yet another information indication manner according to an embodiment of the present disclosure.
FIG. 10A is a schematic diagram of yet another information indication manner according to an embodiment of the present disclosure.
FIG. 10B is a schematic diagram of yet another information indication manner according to an embodiment of the present disclosure.
FIG. 11 is a schematic diagram of another manner of generating an modulation constellation according to an embodiment of the present disclosure.
FIG. 12 is a schematic diagram of a structure of a communication device according to an embodiment of the present disclosure.
FIG. 13 is a schematic diagram of a structure of a communication device according to another embodiment of the present disclosure.
FIG. 14 is a schematic diagram of a structure of an apparatus to which the embodiments of the present disclosure may be applied.

### DETAILED DESCRIPTION

Hereinafter, the technical solutions in the present disclosure will be described with reference to the accompanying drawings.

### Communication system architecture

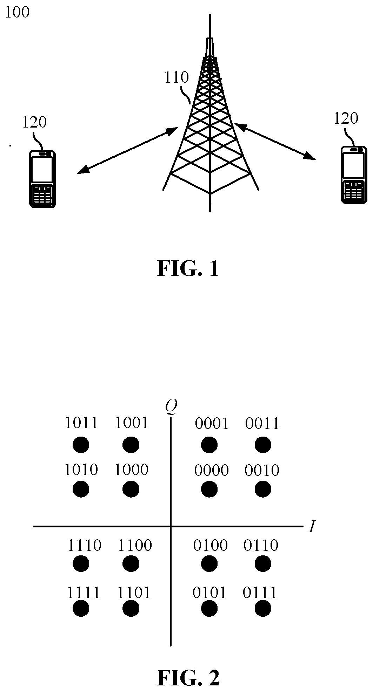

FIG. 1 is an example diagram of a system architecture of a wireless communication system 100 to which the embodiments of the present disclosure may be applied. The wireless communication system 100 may include a network device 110 and a terminal device 120. The network device 110 may be a device that communicates with the terminal device 120. The network device 110 may provide communication coverage for a specific geographic area and may communicate with the terminal device 120 located within the coverage area.

FIG. 1 exemplarily illustrates one network device and one terminal device. Optionally, the wireless communication system 100 may include one or more network devices 110 and/or one or more terminal devices 120. For a network device 110, the one or more terminal devices 120 may all be located within the network coverage range of the network device 110; or may all be located outside the network coverage range of the network device 110; or part of the one or more terminal devices may be located within the coverage range of the network device 110, and the other part may be located outside the network coverage range of the network device 110, which is not limited in the embodiment of the present disclosure.

Optionally, the wireless communication system 100 may further include other network entities, such as a network controller and a mobility management entity, which is not limited in the embodiment of the present disclosure.

It should be understood that the technical solutions of the embodiments of the present disclosure can be applied to various communication systems, such as a fifth generation (5G) system or a new radio (NR) system, a long term evolution (LTE) system, an LTE frequency division duplex (FDD) system, an LTE time division duplex (TDD) system, and the like. The technical solution provided in the present disclosure can also be applied to future communication systems, such as a sixth generation mobile communication system, a satellite communication system, and the like.

The terminal device in the embodiment of the present disclosure may also be referred to as user equipment (UE), an access terminal, a subscriber unit, a subscriber station, a mobile platform, a mobile station (MS), a mobile terminal (MT), a remote station, a remote terminal, a mobile device, a user terminal, a terminal, a wireless communication device, a user agent or a user apparatus. The terminal device in the embodiment of the present disclosure may be a device that provides voice and/ or data connectivity to a user, and may be used to connect people, objects and machines, for example, a handheld device having a wireless connection function, an in-vehicle device, or the like. The terminal device in the embodiment of the present disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, a UE may act as a scheduling entity that provides sidelink signals between UEs in V2X or D2D, etc. For example, the cellular telephone and the automobile communicate with each other by using sidelink signals. Communication between the cellular phone and smart home device does not require the relay of communication signals through the base station.

The network device in the embodiment of the present disclosure may be a device for communicating with a terminal device. The network device may also be referred to as an access network device or a radio access network device, for example, the network device may be a base station. The network device in the embodiment of the present disclosure may refer to a radio access network (RAN) node (or device) that enables the terminal device to be accessed the wireless network. The base station may broadly cover or be replaced with the following various names: a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point, a transmission node, a receive-send node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a master node, or the like, or a combination thereof. The base station may also refer to a communication module, modem, or chip disposed within the aforementioned apparatus or apparatus. The base station may also be a mobile switching center, or a device functioning as a base station in device-to-device (D2D), a vehicle-to-everything (V2X), a machine-to-machine (M2M) communication, or a network-side device in a 6G network, or a device functioning as a base station in a future communication system, or the like. The base stations may support networks of the same or different access technologies. The embodiments of the present disclosure do not limit the specific technology and the specific device form adopted by the network device.

The base station may be fixed or mobile. For example, a helicopter or drone may be configured to act as a mobile base station, and one or more cells may move according to the position of the mobile base station. In other examples, a helicopter or drone may be configured as a device to communicate with another base station.

In some deployments, the network device in the embodiment of the present disclosure may refer to a CU or a DU, or the network device includes a CU and a DU. The gNB may also include an AAU.

The network device and terminal device may be deployed on land, including indoor or outdoor, handheld, or vehicle-mounted; they may also be deployed on the water; they may also be deployed in the air (e.g., on aircraft, balloons and satellites). In the embodiment of the present disclosure, the scenario in which the network device and the terminal device are located is not limited.

It should be understood that all or part of the functions of the communication device in the present disclosure may also be implemented by software functionality running on hardware, or by virtualization functionality instantiated on a platform, such as a cloud platform.

### Signal modulation

Signal modulation is a process of converting information bits generated by a signal source into a form suitable for wireless transmission. In NR and LTE systems, the main modulation manners include phase shift keying (PSK) and quadrature amplitude modulation (QAM), for example, 2PSK, quadrature phase shift keying (QPSK), 16QAM, 64QAM, 256QAM, 1024QAM, and so on. The above modulation manners all belong to a modulation manner of joint amplitude-phase keying. A vector diagram of a modulation manner described above is similar to a constellation, so it is often referred to as a modulation constellation, as illustrated in FIG. 2 below. In a wireless communication system, since signals are usually represented by complex numbers, the horizontal and vertical coordinates of the modulation constellation correspond to the values of the real and imaginary parts of the complex signal, respectively. Both communicating parties need to have a consensus on the modulation manner. In the 38.211 protocol of the 3rd generation partnership project (3GPP), the modulation and demodulation manner of each channel in the physical layer is defined. The density of constellation points varies among different modulation manners, so different modulation manners offers different communication efficiencies and different tolerances to noise and interference. For example, compared to a signal under 16QAM, a signal under 256QAM modulation can carry a larger amount of information, but its ability to resist noise is significantly reduced.

### Multiple data stream parallel transmission under MIMO

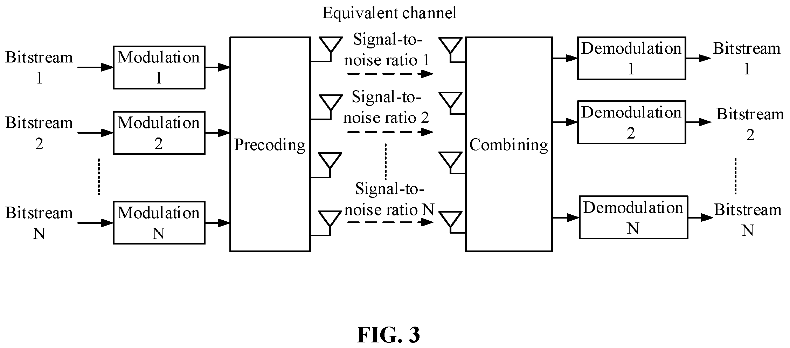

The rate and stability of data transmission are important indicators to evaluate the performance of wireless communication systems. In wireless communication systems, the evolution of MIMO technology has always been one of the core driving forces to improve the communication performance of physical layer. MIMO technology allows the construction of multiple parallel wireless signal transmission links/transport layers that do not interfere with each other (or have little interference with each other) between a signal transmitter and receiver having multiple antennas. Based on the multiple transport layers, multiple data streams can be transmitted in parallel, namely spatial multiplexing, thus greatly increasing the transmission rate. In order to implement the above-described process, both the signal transmitter and receiver need to acquire necessary channel state information (CSI), and use the CSI as a basis to perform appropriate pre-processing (precoding) and post-processing (combining) on the transmission signal. As illustrated in FIG. 3, spatial multiplexing based on MIMO may be regarded as constructing multiple parallel transport layers between the transmitting end and the receiving end. Each transport layer may independently transmit a data stream, and different data streams may adopt different modulation and demodulation manners.

### Link adaptation

The channel condition of wireless communication will change with the change of communication environment, which has a great uncertainty. Theoretically speaking, no set of signal modulation and precoding manners may be universally applicable to various channel conditions. Therefore, the link adaptation technology is proposed. Through the link adaptation technology, the transmission parameters of the system are adaptively adjusted according to the current acquired channel state information, to overcome or adapt to the influence brought by the current channel change. From the basic principle of link adaptation technology, it can be seen that link adaptation technology mainly includes two aspects: on the one hand, it is the acquisition of channel information, that is, the accurate and effective acquisition of current channel environment parameters; on the other hand, it is the adjustment of transmission parameters. In NR and LTE systems, the acquisition of channel information is realized by the CSI feedback process. CSI feedback content mainly includes a rank indicator (RI), a precoding matrix indicator (PMI), a channel quality indication (CQI), and the like. The adjustment of transmission manner is mainly realized by adjusting the precoding manner, modulation manner and channel coding rate. Taking FIG. 3 as an example, the link adaptation will determine how many parallel transport layers to be constructed by precoding according to the current channel condition, and determine the modulation manner according to the equivalent signal-to-noise ratios corresponding to different transport layers. For example, high-order modulation is used for the transport layer with a high signal-to-noise ratio, while relatively low-order modulation is used for the transport layer with a low signal-to-noise ratio.

Theoretically, in order to maximize the communication capacity of the wireless communication system, it is necessary to maximize the mutual information between the transmit signal (X) at the transmitting end and the reception signal (Y) after passing through the wireless channel. Based on Y = H*X + N (where H represents the wireless channel and N represents the noise), it can be derived that in order to maximize the communication capacity, the optimal modulated signal (X) needs to be calculated based on the channel (H) through which it will pass.

Due to the compromise between signal modulation freedom and control/indication signaling overhead, the current standards (such as LTE/NR standard) only include a few representative modulation manners and their constellation representations (i.e., the seven representations defined in 38.211 5.1), and the modulation manners used for signal transmission can only be limited to those.

However, the theoretically optimal signal modulation manner (or modulation constellation) is determined by the channel environment in which the transmission is located. In real environment, channel conditions are ever-changing, but only selecting from several modulation manners (or modulation constellations) defined by the standard may not achieve the optimal matching between modulation constellations and channel states, so that the communication performance is limited. However, based on the traditional method, it is not advisable to significantly increase the types of modulation manners (or the number of modulation constellations) in a predefined form by using mathematical formulas in the standard, which will lead to a huge signaling overhead when both communicating parties indicate modulation manners.

As mentioned earlier, the working logic of the MIMO part in conventional communication systems (such as LTE and NR systems) is to convert the MIMO channel into multiple transport layers that do not interfere with each other by pre-processing (precoding) at the transmitting end and post-processing (combining) at the receiving end, and transmit a data stream independently on each transport layer. Through link adaptation, the system can choose the appropriate modulation manners (for example, one of QPSK, 16QAM, 64QAM and 256QAM) on different transport layers according to the signal-to-noise ratio. This essentially realizes the information allocation among data streams according to the channel qualities of different communication links, that is, the transport layer with a better channel quality carries more information, and the transport layer with a poor channel quality carries less information.

However, no matter how the algorithm of the link adaptation part is optimized, the final effect is limited by the traditional modulation manner and cannot reach the optimum. Specifically, conventional modulation manners perform the representation of signals in a two-dimensional signal space (two dimensions correspond to a real part and an imaginary part of a complex space, respectively). The denser the constellation points are, the more information (that is, the greater number of bits) a single modulation symbol can represent. For example, a single QPSK, 16QAM, 64QAM, 256QAM symbol may represent 2, 4, 6, 8 bits of information, respectively. When the communication system allocates information amount and power among different data streams, it will be constrained by the above-mentioned limited modulation manners. However, the above-mentioned problem cannot be fundamentally solved by simply adding more two-dimensional modulation manners to the standard (e.g., adding 8QAM corresponding to 3 bits, 32QAM corresponding to 5 bits, etc.). The reason is that in this way, only "hard" allocation of information amount among data streams can be achieved (i.e., the information amount carried on each data stream is an integer multiple of bits), while the optimal transmission requires "soft" allocation of information amount among data streams (i.e., the information amount carried on each data stream may be a non-integer multiple of bits).

In view of the above problems, embodiments of the present disclosure will be described in detail below.

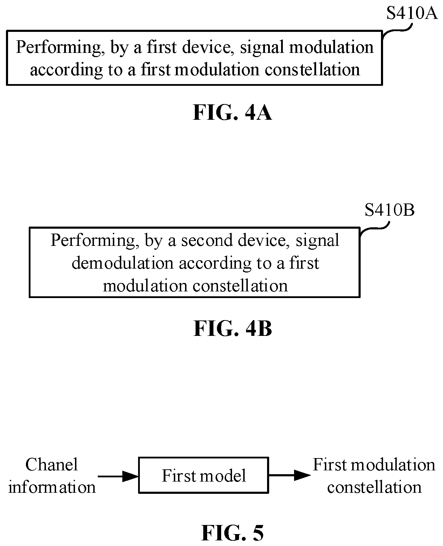

Referring to FIGS. 4A to 4B, a first device performs signal modulation according to a first modulation constellation (step S410A). Correspondingly, a second device performs signal demodulation according to the first modulation constellation (step S410B). The first device is a signal sending device. The second device is a signal receiving end device. For example, if the first device is a network device, the second device may be a terminal device. For another example, if the first device is a terminal device, the second device may be a network device.

The first modulation constellation may be understood as a representation of a modulation manner. It should be understood that the modulation constellation and the modulation manner mentioned in the various embodiments of the present disclosure may be used interchangeably without conflict.

The first modulation constellation may be generated based on the channel information. That is, appropriate modulation constellations can be generated based on the actual channel environment, rather than being restricted to a limited number of modulation constellations, thereby improving the performance of the communication system.

The embodiment of the present disclosure does not specifically limit the form of channel information for generating the first modulation constellation. For example, the channel information may include full channel information. Full channel information may also be referred to as complete channel information, for example, it may be originally acquired channel information. The full channel information may be represented in a variety of forms, such as in a frequency domain form or in a time domain form. By generating the first modulation constellation based on the full channel information, the accuracy of the generated first modulation constellation can be improved.

As another example, the channel information may include a measurement metric for representing channel energy or channel quality. For example, the measurement metric for representing channel energy or channel quality may include one or more of: reference signal receiving power (RSRP), reference signal receiving quality (RSRQ), received signal strength indication (RSSI), signal to noise ratio (SNR), or signal to interference plus noise ratio (SINR). Compared to a manner in which full channel information is employed, generating the first modulation constellation based on the measurement metric is relatively simple, and thus the implementation complexity can be reduced.

As another example, the channel information may include CSI (or channel characteristic value) fed back by the second device (the receiving end device). The CSI may include, for example, one or more of: rank indication (RI), precoding matrix indicator (PMI), and channel quality indicator (CQI). The channel information fed back by the receiving end device can more accurately reflect the real channel condition, and thus the accuracy of the generated first modulation constellation can be improved.

In some implementations, the channel information may also be a statistic (e.g., mean, variance, probability density function, cumulative distribution function) obtained by measuring one or more of the above information over a time duration. By generating the first modulation constellation based on the statistic over the time duration, the accuracy of the generated first modulation constellation can be improved.

In some implementations, the first modulation constellation may be generated after the channel information is processed based on the first model. That is, a model-based modulation constellation generation method may be adopted, so that the communication system can formulate the most suitable signal modulation manner based on the actual channel environment at present, thereby improving communication efficiency. Different from the traditional scheme in the standard (38.211), which provides predefined several modulation manners based on mathematical expressions, the model-based modulation constellation generation manner can flexibly generate the suitable modulation constellation according to the actual channel condition, so as to realize "customized" signal modulation truly adapted to the channel.

The first model mentioned above may be an artificial intelligence (AI) /machine learning (ML). The embodiment of the present disclosure does not specifically limit the type or structure of the first model. For example, the first model may be a neural network model (e.g., convolutional neural network (CNN), recurrent neural network (RNN), deep neural network (DNN), Transformer), or a simple machine learning model (e.g., logistic regression, decision tree model).

The embodiment of the present disclosure does not specifically limit the manner of acquiring the first model. In some implementations, the first model may be provided by a network device. For example, the network device may predict and store one or more sets of models and corresponding model identities (IDs). The network device may distribute or configure the first model among the stored models to the terminal device by means of the following manner: broadcast information, radio resource control (RRC), medium access control control element (MAC CE), downlink control information (DCI), physical downlink shared channel (PDSCH), or the like, for use by the terminal device. In other implementations, the first model may be a vendor predefined model. For example, the vendor of the network device and/or the terminal device may pre-define one or more sets of models and corresponding model IDs. In other implementations, the first model may also be obtained through a third-party channel.

Referring to FIG. 5, a first model may be used to process channel information, so as to generate a first modulation constellation. For example, channel information may be input into a first model, and after processing by the first model, a first constellation modulation may be output. The embodiment of the present disclosure does not specifically limit the type of channel information input to the first model. For example, the channel information may include one or more of: full channel information, the measurement metric representing channel energy or channel quality, or CSI fed back by the receiving end. The full channel information may be represented in a variety of forms, such as in a frequency domain form or in a time domain form. For example, the measurement metric representing channel energy or channel quality may include one or more of: RSRP, RSRQ, RSSI, SNR, or SINR. For example, the CSI fed back by the receiving end may include one or more of: RI, PMI, or CQI. In addition, optionally, the channel information input to the first model may be a statistic (e.g., mean, variance, probability density function, cumulative distribution function) obtained by measuring one or more of the above information over a time duration.

It should be understood that the first modulation constellation may be generated based on other manners in addition to generating the first modulation constellation based on the first model. For example, a program may be run whose function is to generate a modulation constellation based on channel information.

The first modulation constellation mentioned above may be applied to a two-dimensional complex signal space in accordance with the traditional modulation manner, so as to modulate the data stream on one transport layer. Alternatively, the first modulation constellation may not be limited to the two-dimensional complex signal space, but multiple parallel transport layers constructed by the MIMO system may be regarded as a joint high-dimensional space, and high-dimensional signal modulation is performed in this space (that is, joint modulation is performed on data streams on multiple transport layers).

The difference between high-dimensional spatial modulation (abbreviated as high-dimensional modulation) and conventional two-dimensional spatial modulation (abbreviated as two-dimensional modulation) is described below.

Two-dimensional modulation means that the wireless communication system converts the MIMO channel into N non-interfering transport layers through necessary processing at the sending end and the receiving end, and each transport layer is independently two-dimensional modulated to transmit data streams.

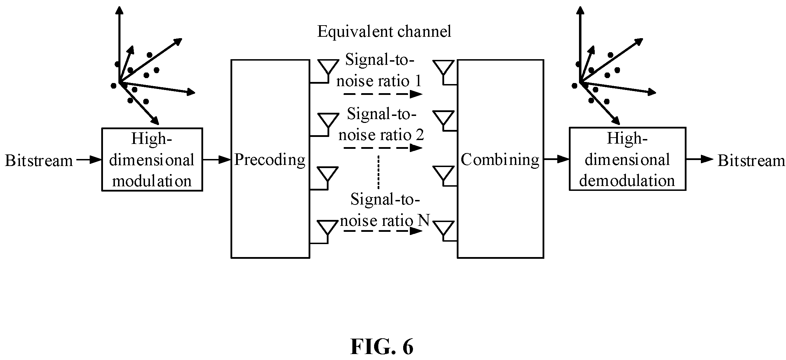

High-dimensional modulation means that N non-interfering transport layers constructed by wireless communication system are combined as a 2N-dimensional modulation space (each transport layer provides 2 dimensions, which can be regarded as a 2N-dimensional space when the transport layers are combined). Then, high-dimensional signal modulation and reception are performed in this high-dimensional space (as illustrated in FIG. 6). Hereinafter, implementations of two-dimensional modulation and high-dimensional modulation will be described in more detail with reference to the first embodiment and second embodiment.

### First embodiment: Two-dimensional modulation

In the first embodiment, the first modulation constellation is a two-dimensional modulation constellation, so the first modulation constellation can be used to modulate a data stream on a single transport layer. The first modulation constellation, like the conventional modulation constellation defined by current standards (e.g., LTE/NR standard), is represented in a two-dimensional complex signal space. However, compared to the limited number of modulation constellations predefined in the standard, the embodiment of the present disclosure may generate, according to the specific channel condition, more modulation constellations that better matches the channel condition.

The first modulation constellation represents a mapping relationship between information bits and modulation symbols (two-dimensional complex symbols). The embodiment of the present disclosure does not specifically limit the representation form of the mapping relationship. For example, if the position information of the modulation symbol is represented by a real part and an imaginary part, the mapping relationship may take, for example, the representation form illustrated in Table 1. As another example, if the position information of the modulation symbol is represented by an amplitude and a phase, the mapping relationship may take, for example, the representation form illustrated in Table 2. Both x and y in Table 1 and Table 2 represent floating-point numbers.

**Table 1**

| Information bits | Real-part coordinate | Imaginary-part coordinate |
|---|---|---|
| 000 | x1 | y1 |
| 001 | x2 | y2 |
| 010 | x3 | y3 |
| 011 | x4 | y4 |
| ... | ... | ... |
| 111 | xn | yn |

**Table 2**

| Information bits | Amplitude | Phase |
|---|---|---|
| 000 | x1 | y1 |
| 001 | x2 | y2 |
| 010 | x3 | y3 |
| 011 | x4 | y4 |
| ... | ... | ... |
| 111 | xn | yn |

### Second embodiment: High-dimensional modulation

In the second embodiment, the first modulation constellation is a high-dimensional modulation constellation (the dimension is greater than 2). Traditional modulation constellations defined by current standards (such as LTE/NR standard) are all represented in two-dimensional complex signal space. Compared with the traditional modulation constellation, for the high-dimensional first modulation constellation, N non-interfering transport layers constructed by wireless communication system are regarded as a combined 2N-dimensional modulation space (each transport layer provides 2 dimensions, which can be regarded as a 2N-dimensional space when the transport layers are combined). Compared to the conventional modulation constellation, the first modulation constellation has a higher degree of freedom to make the modulated signal better matches the current channel condition.

The first modulation constellation represents a mapping relationship between information bits and modulation symbols (high-dimensional modulation symbols). The embodiment of the present disclosure is not particularly limited to the representation form of the mapping relationship. For example, any one of the representation forms shown in Table 3 to Table 5 (x in Table 3 to Table 5 represents a floating point number) may be adopted.

**Table 3**

| Information bits | Coordinate in the first dimension | Coordinate in the second dimension | Coordinate in the third dimension | Coordinate in the fourth dimension | ... | Coordinate in the n-th dimension |
|---|---|---|---|---|---|---|
| 000 | x11 | x12 | x13 | x14 | ... | x1n |
| 001 | x21 | x22 | x23 | x24 | ... | x2n |
| 010 | x31 | x32 | x33 | x34 | ... | x3n |
| 011 | x41 | x42 | x43 | x44 | ... | x4n |
| ... | ... | ... | ... | ... | ... | ... |
| 111 | xn1 | x12 | xn3 | xn4 | ... | xnn |

**Table 4**

| Information bits | Transport Layer 1 | | Transport Layer 2 | | ... | Transport layer n | |
|---|---|---|---|---|---|---|---|
| | Real-part coordinate | Imaginary -part coordinate | Real-part coordinate | Imaginary-part coordinate | | Real-part coordinate | Imaginary-part coordinate |
| 000 | x11 | y11 | x12 | y12 | ... | x1n | y1n |
| 001 | x21 | y21 | x22 | y22 | ... | x2n | y2n |
| 010 | x31 | y31 | x32 | y32 | ... | x3n | y3n |
| 011 | x41 | y41 | x42 | y42 | ... | x4n | y4n |
| ... | ... | ... | ... | ... | ... | ... | ... |
| 111 | xn1 | yn1 | xn2 | yn2 | ... | xnn | ynn |

**Table 5**

| Information bits | Transport Layer 1 | | Transport Layer 2 | | ... | Transport layer n | |
|---|---|---|---|---|---|---|---|
| | Amplitude | Phase | Amplitude | Phase | | Amplitude | Phase |
| 000 | x11 | y11 | x12 | y12 | ... | x1n | y1n |
| 001 | x21 | y21 | x22 | y22 | ... | x2n | y2n |
| 010 | x31 | y31 | x32 | y32 | ... | x3n | y3n |
| 011 | x41 | y41 | x42 | y42 | ... | x4n | y4n |
| ... | ... | ... | ... | ... | ... | ... | ... |
| 111 | xn1 | yn1 | xn2 | yn2 | ... | xnn | ynn |

The specific form of the first modulation constellation is described in detail above. In a wireless communication system, both the first device (signal sending device) and the second device (signal receiving device) need to have an accurate understanding of the adopted modulation manner, in order to successfully realize signal demodulation. Therefore, there is a need to support a relevant indication mechanism in the communication system, so that the first device and the second device agree on the modulation manner. Taking the first modulation constellation being a modulation constellation generated based on the first model as an example, the first model may be deployed (or operate) at both ends or at a single end of the communication. In case that the first model is deployed at the single end of the communication, it can be further distinguished that the first model is deployed at the sending end or the receiving end. In different cases, the manners the two communicating parties indicate the first modulation constellation generated by the first model may differ. The following discusses each case separately.

### First case: the first model is deployed at both ends of the communication

In the first case, both the first device and the second device are deployed with a first model that may output a modulation constellation. The first device performs signal modulation according to the first modulation constellation output by the first model, and the second device performs signal demodulation according to the first modulation constellation output by the first model. Successful modulation and demodulation depend on the following three conditions.

First condition: the first model deployed on the first device and the first model deployed on the second device are consistent. That is, the first device and the second device use the same first model, otherwise, the first device and the second device will generate different modulation constellations, resulting in a modulation-demodulation mismatch.

Second condition: the input information of the first model deployed on the first device and the input information of the first model deployed on the second device need to be consistent. If the input information of the first model on the first device and the input information of the first model on the second device are different, the first device and the second device will generate different modulation constellations, resulting in a modulation-demodulation mismatch.

Third condition: the first device and the second device need to update the modulation constellation synchronously (for example, the same channel information may be input into the first model to output the updated modulation constellation). If the updating time points of the modulation constellation are not synchronized between the first device and the second device, the modulation-demodulation mismatch will likewise occur.

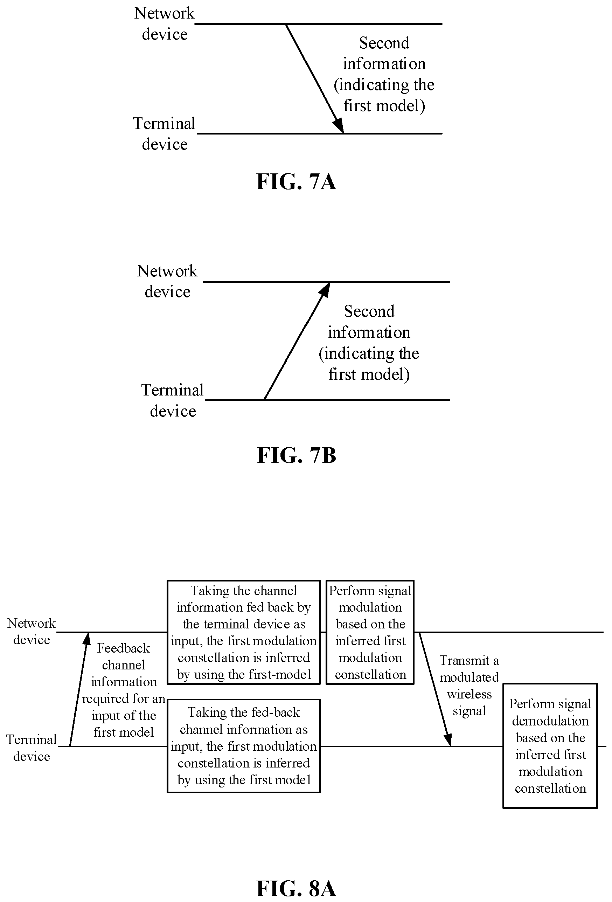

In order to ensure that the first models deployed on the first device and the second device are consistent, the alignment between the model on the first device and the model on the second device needs to be ensured by a certain mechanism. For example, before executing step S410A, the first device may send second information to the second device. The second information indicates the first model (the first model may be used to generate the aforementioned first modulation constellation, a detailed description of the first model is described above and will not be described in detail here). Alternatively, before executing step S410B, the second device may send second information to the first device. The second information indicates the first model (the first model may be used to generate the aforementioned first modulation constellation, a detailed description of the first model is described above and will not be described in detail here). The second information may be, for example, a model ID of the first model, or model identification information with another type. Taking the first device being a network device and the second device being a terminal device as an example, the second information may be distributed or configured from the network device to the terminal device by means of broadcast information, RRC, MAC CE, DCI, PDSCH, or the like (see FIG. 7A). Alternatively, the second information may be reported from the terminal device to the network device by means of RRC, MAC CE, uplink control information (UCI), physical uplink shared channel (PUSCH), or the like (see FIG. 7B).

In order to ensure that the input information of the first model deployed on the first device and the input information of the first model deployed on the second device are consistent, the input information of the first model may be given by one of the first device and the second device. As previously described, the input required by the first model is channel information (e.g., full channel information, measurement metric representing channel quality, CSI, etc.), and thus, the first device may send channel information to the second device, or the second device may send channel information to the first device.

For example, for downlink transmission, the terminal device may feed back downlink channel information to the network device (feedback may be performed through RRC, MAC CE, UCI, PUSCH, CSI, or the like), as illustrated in FIG. 8A.

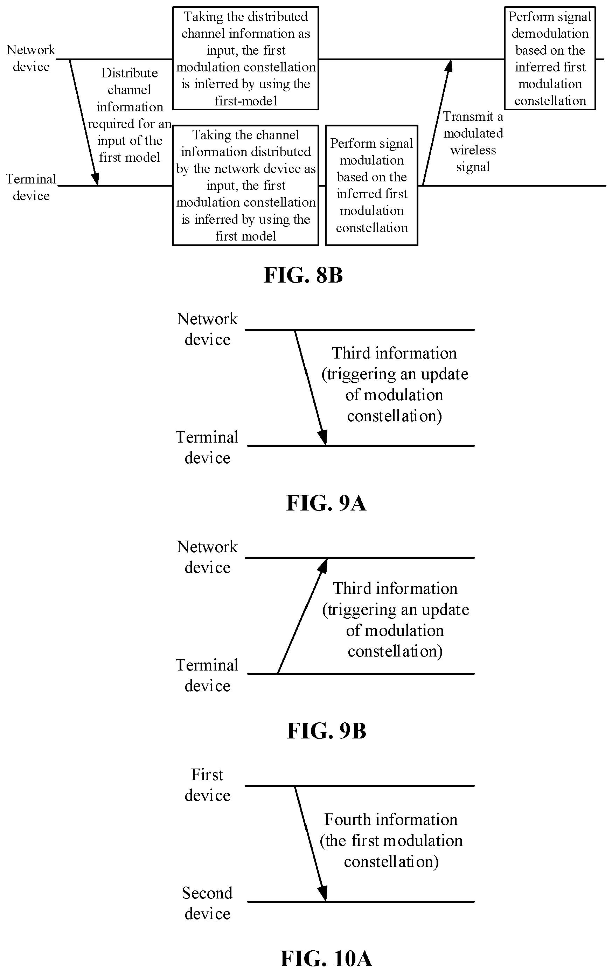

As another example, for uplink data transmission, the network device needs to inform the terminal device of uplink channel information (through RRC, MAC CE, DCI, PDSCH, or the like), as illustrated in FIG. 8B.

In order to ensure that both ends synchronously update the modulation constellation through the model, it is necessary to trigger the update of the modulation constellation by one of the network device or the terminal device. For example, as illustrated in FIG. 9A, third information (the third information may be a trigger signaling) may be sent by the network device to the terminal device. The third information is used to trigger the terminal device to update the modulation constellation (the aforementioned first modulation constellation may be an updated modulation constellation). As another example, as illustrated in FIG. 9B, the third information may be sent by the terminal device to the network device. The third information is used to trigger the network device to update the modulation constellation (the aforementioned first modulation constellation may be an updated modulation constellation).

In some implementations, the third information may trigger the following behavior: updating the modulation constellation to the first modulation constellation based on the channel information. For example, the third information may trigger a receiving device (which may be the first device or the second device) of the third information to perform, based on the first model, an update of the modulation constellation once. After having received the third information, the receiving device of the third information may directly input the current channel information (which may be the latest channel information collected or measured by the receiving device itself, or the latest channel information fed back by the peer device) into the first model, thereby updating the modulation constellation by model inference, and obtaining the first modulation constellation.

In some implementations, the third information may trigger the following behavior: performing multiple updates of the modulation constellation. For example, the third information may trigger the receiving device (which may be the first device or the second device) of the third information to repeatedly update the modulation constellation at a first period. In this case, the aforementioned first modulation constellation may be one of the modulation constellations obtained by updating according to the first period. For example, when the first period is T, the receiving device of the third information needs to update the modulation constellation at the future time point t1, time point t1+ T, time point t1+2T, and time point t1+ nT. When the time point t1, the time point t1+ T, the time point t1+2T, and the time point t1+ nT arrive, the receiving device of the third information may generate a new modulation constellation by using the latest channel information acquired or received at the corresponding time point.

As another example, multiple time points (i.e., multiple update time points) may be configured for the receiving device (which may be the first device or the second device) of the third information. Then, the third information may trigger the receiving device of the third information to update the modulation constellation at the multiple update time points. In this case, the aforementioned first modulation constellation may be one of the modulation constellations obtained by updating at the multiple update time points. For example, the third information indicates that the receiving device of the third information updates the modulation constellation at the future time point t1, time point t2, and time point t3, then the receiving device of the third information needs to update the modulation constellation at the future time point t1, time point t2, and time point t3. When the time point t1, the time point t2 and the time point t3 arrive, the receiving device of the third information may generate a new modulation constellation by using the latest channel information acquired or received at the corresponding time point.

In some implementations, the third information may trigger the following behavior: updating the modulation constellation in case that the first condition is met. The first condition may be set according to actual needs. For example, the third information may trigger the receiving device of the third information to automatically update, based on the channel information, the constellation each time the channel information is received. In this case, the aforementioned first modulation constellation may be an updated modulation constellation when the first condition is satisfied.

If the third information is sent by the network device to the terminal device, the third information may be carried by one or more of: broadcast information, RRC, MAC CE, DCI, PDSCH, or the like. If the third information is sent by the terminal device to the network device, the third information may be carried by one or more of: RRC, MAC CE, UCI, PUSCH, or the like.

### Second case: the first model is deployed at the signal sending end

In the second case, only the first device (signal sending device) is deployed with the first model for generating the modulation constellation. Therefore, when the first device generates a new modulation constellation based on the first model, in order to ensure that the second device (signal receiving device) can successfully demodulate the signal sent by the first device, referring to FIG. 10A, the first device may send the first modulation constellation (i.e., the updated modulation constellation) to the second device through the fourth information, to instruct the second device to perform signal demodulation by using the first modulation constellation. After the second device receives the updated modulation constellation, both parties can perform signal modulation and demodulation through the first modulation constellation. When the first device is a network device, the first modulation constellation may be distributed or configured to the second device (terminal device) through one or more of: broadcast information, RRC, MAC CE, DCI, PDSCH, or the like. When the first device is a terminal device, the first modulation constellation may be reported to the second device (network device) by one or more of: RRC, MAC CE, UCI, PUSCH, or the like.

### Third case: the first model is deployed at the signal receiving end

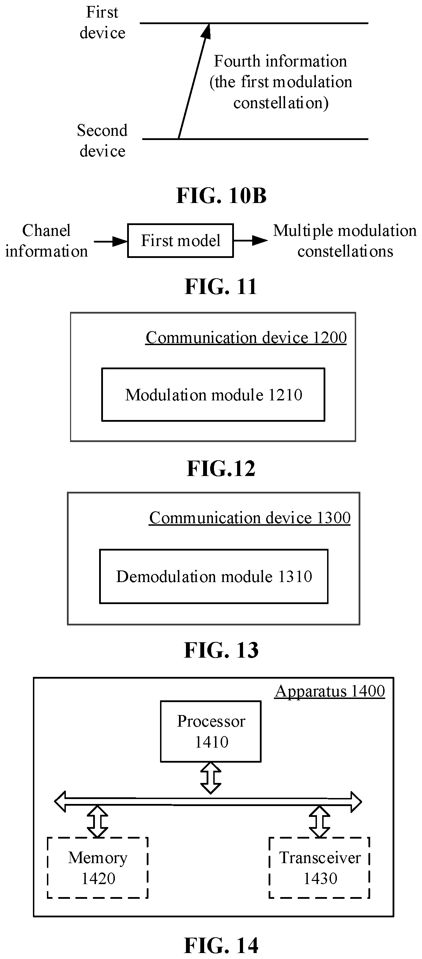

In the third case, only the second device (signal receiving device) is deployed with the first model for generating the modulation constellation. Therefore, when the second first device generates a new modulation constellation based on the first model, in order to ensure that the first device (signal sending end) can successfully perform demodulation, referring to FIG. 10B, the second device may send the first modulation constellation (i.e., the updated modulation constellation) to the first device through the fourth information, to instruct the first device to perform signal modulation by using the first modulation constellation. After the first device receives the first modulation constellation, both parties can perform signal modulation and demodulation through the first modulation constellation. When the second device is a network device, the first modulation constellation may be distributed or configured to the first device (terminal device) through one or more of: broadcast information, RRC, MAC CE, DCI, PDSCH, or the like. When the second device is a terminal device, the first modulation constellation may be reported to the first device (network device) by one or more of: RRC, MAC CE, UCI, PUSCH, or the like.

The embodiment of the present disclosure does not specifically limit the number of modulation constellations generated based on the channel information. For example, a modulation constellation (such as the first modulation constellation mentioned above) may be generated based on the channel information. As another example, as illustrated in FIG. 11, multiple modulation constellations may be generated based on the channel information (in this case, the first modulation constellation mentioned above may be one of the multiple modulation constellations). The multiple modulation constellations may correspond to different modulation orders. That is, the difference between the multiple modulation constellations may be the different numbers of modulation symbols (or the different densities of constellation points). By analogy, QPSK, 16QAM, 64QAM and 256QAM in the conventional modulation manner contain 4, 16, 64, and 256 modulation symbols, respectively. It should be noted that the multiple modulation constellations generated based on the channel information may be composed of multiple two-dimensional modulation constellations, or may be composed of multiple high-dimensional constellations. Alternatively, the multiple modulation constellations generated based on the channel information may include both a two-dimensional modulation constellation and a high-dimensional modulation constellation.

If multiple modulation constellations are generated based on the channel information, both communication parties need to specify one modulation constellation for modulation and demodulation during use. For example, a currently used modulation constellation may be determined, based on the CQI in the CSI feedback, in a manner similar to the link adaptation technology of the current communication system. The specific selection algorithm may be autonomously implemented by the communication device. In addition, both communication parties need to indicate, through information interaction (e.g., signaling interaction), which modulation constellation in the multiple constellations is specifically adopted for the current signal sending.

For example, the first device (signal sending device) sends the first information to the second device (signal receiving device). The first information is used to indicate a first modulation constellation (i.e., a currently used modulation constellation). After having received the first information, the second device may perform, based on the indication of the first information, signal demodulation by using the first modulation constellation.

As another example, the first device (signal sending device) may receive the first information sent by the second device (signal receiving device). The first information is used to indicate a first modulation constellation. After having received the first information, the first device may perform, based on the indication of the first information, signal modulation by using the first modulation constellation.

The first information may be, for example, an index of the first modulation constellation in the multiple modulation constellations. Through the index, the signal transmitting device/signal receiving device can know which modulation constellation should be used for the signal modulation/demodulation.

For the downlink transmission, the selection of the modulation constellation may be made by the network device. For example, the network device may carry the first information through downlink signaling (e.g., DCI), to indicate the modulation constellation adopted by the terminal device to send the signal. Alternatively, for the downlink transmission, the modulation constellation may be selected by the terminal device. For example, the terminal device may inform, through uplink signaling (e.g., UCI or CSI), the network device which modulation constellation should be used to send the downlink signal. Similarly, for the uplink transmission, the modulation constellation may be selected by the terminal device and indicated through uplink signaling (e.g., UCI), or may be selected by the network device and indicated through downlink signaling (e.g., DCI).

Method embodiments of the present disclosure are described in detail above with reference to FIGS. 1 to 11, and apparatus embodiments of the present disclosure are described in detail below with reference to FIGS. 12 to 14. It should be understood that the description of the method embodiment and the description of the device embodiment correspond to each other. Therefore, the portions not described in detail can be referred to the foregoing method embodiments.

FIG. 12 is a schematic diagram of a structure of a communication device according to an embodiment of the present disclosure. The communication device 1200 illustrated in FIG. 12 may be the aforementioned first device. The communication device 1200 includes a modulation module 1210. The modulation module 1210 is used for performing signal modulation according to a first modulation constellation, the first modulation constellation being generated based on channel information.

In some implementations, the first modulation constellation is used to modulate a data stream on one transport layer. Alternatively, the first modulation constellation is used to jointly modulate data streams on multiple transport layers.

In some implementations, a dimension of the first modulation constellation is greater than or equal to 2.

In some implementations, the dimension of the first modulation constellation is equal to 2N, and N represents a number of transport layers.

In some implementations, the channel information is used to generate multiple modulation constellations, the multiple modulation constellations including the first modulation constellation.

In some implementations, the communication device 1200 further includes: a first communication module for sending first information to a second device. The first information is used to indicate the first modulation constellation.

In some implementations, the communication device 1200 further includes: a second communication module for receiving first information from a second device. The first information is used to indicate the first modulation constellation.

In some implementations, the communication device 1200 further includes: a third communication module for sending one or more of following information to a second device before the signal modulation based on the first modulation constellation: the channel information; second information for indicating a first model, herein the first model is used to generate the first modulation constellation; third information for triggering the second device to update a modulation constellation, herein the first modulation constellation belongs to an updated modulation constellation.

In some implementations, the communication device 1200 further includes: a fourth communication module for receiving one or more of following information from a second device before the signal modulation based on the first modulation constellation: the channel information; second information for indicating a first model, herein the first model is used to generate the first modulation constellation; third information for triggering the first device to update a modulation constellation, herein the first modulation constellation belongs to an updated modulation constellation.

In some implementations, the third information is used to trigger one of following operations: updating a modulation constellation to the first modulation constellation based on the channel information; updating a modulation constellation according to a first period, herein the first modulation constellation is one of modulation constellations that are obtained by updating according to the first period; updating a modulation constellation at multiple time points, herein the first modulation constellation is one of modulation constellations that are obtained by updating at the multiple time points; updating a modulation constellation in case that a first condition is satisfied, herein the first modulation constellation is an updated modulation constellation in case that the first condition is satisfied.

In some implementations, the first condition is that the channel information has been received.

In some implementations, a first model is deployed on both the first device and the second device, the first model being used to generate the first modulation constellation.

In some implementations, the communication device 1200 further includes: a fifth communication module for sending fourth information to a second device before the signal modulation based on the first modulation constellation. The fourth information is used to instruct the second device to perform signal demodulation by using the first modulation constellation.

In some implementations, a first model is deployed on the first device, the first model is not deployed on the second device, and the first model is used to generate the first modulation constellation.

In some implementations, the communication device 1200 further includes: a sixth communication module for receiving fourth information from a second device before the signal modulation based on the first modulation constellation. The fourth information is used to instruct the first device to perform signal modulation by using the first modulation constellation.

In some implementations, a first model is deployed on the second device, the first model is not deployed on the first device, and the first model is used to generate the first modulation constellation.

In some implementations, the channel information includes one or more of following information: full channel information; a measurement metric representing channel energy or channel quality; or channel state information fed back by a second device.

In some implementations, the first modulation constellation is a modulation constellation generated after inputting the channel information into the first model.

FIG. 13 is a schematic diagram of a structure of a communication device according to another embodiment of the present disclosure. The communication device 1300 illustrated in FIG. 13 may be the aforementioned second device. The communication device 1300 includes a demodulation module 1310. The demodulation module 1310 is used for performing signal demodulation according to a first modulation constellation, the first modulation constellation being generated based on channel information.

In some implementations, the first modulation constellation is used to modulate a data stream on one transport layer. Alternatively, the first modulation constellation is used to jointly modulate data streams on multiple transport layers.

In some implementations, a dimension of the first modulation constellation is greater than or equal to 2.

In some implementations, the dimension of the first modulation constellation is equal to 2N, and N represents a number of transport layers.

In some implementations, the channel information is used to generate multiple modulation constellations, the multiple modulation constellations including the first modulation constellation.

In some implementations, the communication device 1300 further includes: a first communication module for receiving first information from a first device. The first information is used to indicate the first modulation constellation.

In some implementations, the communication device 1300 further includes: a second communication module for sending first information to a first device. The first information is used to indicate the first modulation constellation.

In some implementations, the communication device 1300 further includes: a third communication module for receiving one or more of following information from a first device before the signal demodulation based on the first modulation constellation: the channel information; second information for indicating a first model, herein the first model is used to generate the first modulation constellation; third information for triggering the second device to update a modulation constellation, herein the first modulation constellation belongs to an updated modulation constellation.

In some implementations, the communication device 1300 further includes: a fourth communication module for sending one or more following information to a first device before the signal demodulation based on the first modulation constellation: the channel information; second information for indicating a first model, herein the first model is used to generate the first modulation constellation; third information for triggering the first device to update a modulation constellation, herein the first modulation constellation belongs to an updated modulation constellation.

In some implementations, the third information is used to trigger one of following operations:
updating a modulation constellation to the first modulation constellation based on the channel information; updating a modulation constellation according to a first period, herein the first modulation constellation is one of modulation constellations that are obtained by updating according to the first period; updating a modulation constellation at multiple time points, herein the first modulation constellation is one of modulation constellations that are obtained by updating at the multiple time points; updating a modulation constellation in case that a first condition is satisfied, herein the first modulation constellation is an updated modulation constellation in case that the first condition is satisfied.

In some implementations, the first condition is that the channel information has been received.

In some implementations, a first model is deployed on both the first device and the second device, the first model being used to generate the first modulation constellation.

In some implementations, the communication device 1300 further includes: a fifth communication module for receiving fourth information from a first device before the signal demodulation based on the first modulation constellation. The fourth information is used to instruct the second device to perform signal demodulation by using the first demodulation constellation.

In some implementations, a first model is deployed on the first device, the first model is not deployed on the second device, and the first model is used to generate the first modulation constellation.

In some implementations, the communication device 1300 further includes: a sixth communication module for sending fourth information to a first device before the signal demodulation based on the first modulation constellation. The fourth information is used to instruct the first device to perform signal modulation by using the first demodulation constellation.

In some implementations, a first model is deployed on the second device, the first model is not deployed on the first device, and the first model is used to generate the first modulation constellation.

In some implementations, the channel information includes one or more of following information: full channel information; a measurement metric representing channel energy or channel quality; or channel state information fed back by a second device.

In some implementations, the first modulation constellation is a modulation constellation generated after inputting the channel information into the first model.

FIG. 14 is a schematic diagram of a structure of an apparatus according to an embodiment of the present disclosure. The dashed line in FIG. 14 represents that the unit or module is optional. The apparatus 1400 may be used to implement the methods described in the above method embodiments. The apparatus 1400 may be a chip, a terminal device, or a network device.

The apparatus 1400 may include one or more processors 1410. The processor 1410 may support the apparatus 1400 to implement the methods described in the above method embodiments. The processor 1410 may be a general-purpose processor or a special-purpose processor. For example, the processor may be a central processing unit (CPU). Alternatively, the processor may also be another general-purpose processor, a digital signal processor (DSP), an application specific integrated circuit (ASIC), an field programmable gate array (FPGA) or other programmable logic device, a discrete gate or transistor logic device, or a discrete hardware component. The general-purpose processor may be a microprocessor, or the processor may be any conventional processor or the like.

The apparatus 1400 may also include one or more memories 1420. The memory 1420 has stored a program, and the program may be executed by the processor 1410, to cause the processor 1410 to perform the methods described in the above method embodiments. The memory 1420 may a separate device independent of the processor 1410, or may be integrated in the processor 1410.

The apparatus 1400 may also include a transceiver 1430. The processor 1410 may communicate with other devices or chips through the transceiver 1430. For example, the processor 1410 may send and receive data with other devices or chips through the transceiver 1430.

An embodiment of the present disclosure also provides a computer-readable storage medium for storing a program. The computer-readable storage medium can be applied to the communication device provided by the embodiment of the present disclosure, and the program causes the computer to execute the method executed by the terminal or network device in the respective embodiments of the present disclosure.

An embodiment of the present disclosure also provides a computer program product. The computer program product includes a program. The computer program product can be applied to the communication device provided by the embodiment of the present disclosure, and the program causes the computer to execute the method executed by the terminal or network device in the respective embodiments of the present disclosure.

An embodiment of the present disclosure also provides a computer program. The computer program can be applied to the communication device provided by the embodiment of the present disclosure, and the computer program causes the computer to execute the method executed by the terminal or network device in the respective embodiments of the present disclosure.

It should be understood that the terms "system" and "network" may be used interchangeably in the present disclosure. In addition, the terminology used in the present disclosure is for explanation of specific embodiments of the present disclosure only, and is not intended to limit the present disclosure. The terms "first," "second," "third," and "fourth," etc. in the description and claims, and drawings of the present disclosure are used to distinguish different objects, and are not used to describe a particular order. Furthermore, the terms "including" and "having" and any variations thereof are intended to cover non-exclusive inclusions.

The "indicate" mentioned in the embodiments of the present disclosure may be a direct indication, an indirect indication, or may represent an associated relationship. For example, A indicates B, which may mean that A directly indicates B, for example, B can be acquired through A. It may also mean that A indirectly indicates B, for example, A indicates C, and B can be acquired through C. It may also mean that there is an associated relationship between A and B.

In embodiments of the present disclosure, "B corresponding to A" means that B is associated with A, and B can be determined according to A. However, it should also be understood that determining B according to A does not mean that B is determined only according to A, and that B may be determined according to A and/or other information.

In the embodiments of the present disclosure, the term "correspond" may represent that there is a direct correspondence or indirect correspondence relationship between the two, may represent that there is an association between the two, or may represent a relationship of indicating and being indicated, configuring and being configured, or the like.

In the embodiment of the present disclosure, "predefined" or "preconfigured" may be implemented by pre-storing corresponding codes, tables in the device (for example, including the terminal device and network device), or in another manner that can be used to indicate relevant information, and the present disclosure does not limit the specific implementation manner thereof. For example, "predefined" may refer to defined in the protocol.

In the embodiments of the present disclosure, the "protocol" may refer to a standard protocol in the field of communication, and may include, for example, a LTE protocol, an NR protocol, and related protocols applied to a future communication system, which are not limited in the present disclosure.

The term "and/or" in the embodiments of the present disclosure is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

In various embodiments of the present disclosure, the size of the sequence number in the above-described process does not mean the sequence of execution (the sequence of execution in each process should be determined by its function and internal logic), and should not constitute any limitation on the implementation of the embodiments of the present disclosure.

It should be understood that the disclosed system, apparatus and method in several embodiments provided in the present disclosure, may be implemented in other manners. For example, the device embodiments described above are merely schematic, for example, the division of units is only a logical function division, and there may be other division manners in actual implementation. For example, multiple units or components may be combined, or may be integrated into another system; some features may be ignored or not executed. In addition, the coupling or direct coupling or communication connection between each other illustrated or discussed may be an indirect coupling or communication connection through some interfaces, devices or units, which may be electrical, mechanical or otherwise.

The units described as separate components may or may not be physically separate, and the units displayed as units may or may not be physical units, that is, they may be located in one place or may be distributed over multiple network units. Some or all of the units may be selected according to actual needs to achieve the purpose of the solution of the present embodiment.

Furthermore, various functional units in the embodiments of the present disclosure may be integrated into one processing unit or physically present alone, or two or more units may be integrated in one unit.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general purpose computer, a special purpose computer, a computer network, or other programmable apparatus. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center in the wired (e.g., coaxial cable, optical fiber, digital subscriber line (DSL)) or wireless (e.g., infrared, wireless, microwave, etc.) manner. The computer-readable storage medium may be any available medium read by a computer, or may be a data storage device such as a server, a data center, or the like that integrates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above are merely detailed embodiments of the present disclosure, but the protection scope of the present disclosure is not limited thereto, and any person skilled in the art can easily think of changes or substitutions within the technical scope disclosed in the present disclosure, which should be covered within the protection scope of the present disclosure. Therefore, the protection scope of the present disclosure should be based on the protection scope of the claims.

## Claims

1. A method for signal modulation, comprising:
performing, by a first device, signal modulation according to a first modulation constellation, the first modulation constellation being generated based on channel information.

2. The method according to claim 1, wherein
the first modulation constellation is used to modulate a data stream on one transport layer; or
the first modulation constellation is used to jointly modulate data streams on a plurality of transport layers.

3. The method according to claim 1 or 2, wherein a dimension of the first modulation constellation is greater than or equal to 2.

4. The method according to claim 3, wherein the dimension of the first modulation constellation is equal to 2N, and N represents a number of transport layers.

5. The method according to any one of claims 1-4, wherein
the channel information is used to generate a plurality of modulation constellations, the plurality of modulation constellations comprising the first modulation constellation.

6. The method according to claim 5, further comprising:
sending, by the first device, first information to a second device, wherein the first information is used to indicate the first modulation constellation.

7. The method according to claim 5, further comprising:
receiving, by the first device, first information from a second device, wherein the first information is used to indicate the first modulation constellation.

8. The method according to any one of claims 1-7, wherein before performing, by the first device, the signal modulation according to the first modulation constellation, the method further comprises:
sending, by the first device, one or more of following information to a second device:
the channel information;
second information for indicating a first model, wherein the first model is used to generate the first modulation constellation;
third information for triggering the second device to update a modulation constellation, wherein the first modulation constellation belongs to an updated modulation constellation.

9. The method according to any one of claims 1-7, wherein before performing, by the first device, the signal modulation according to the first modulation constellation, the method further comprises:
receiving, by the first device, one or more of following information from a second device:
the channel information;
second information for indicating a first model, wherein the first model is used to generate the first modulation constellation;
third information for triggering the first device to update a modulation constellation, wherein the first modulation constellation belongs to an updated modulation constellation.

10. The method according to claim 8 or 9, wherein the third information is used to trigger one of following operations:
updating a modulation constellation to the first modulation constellation based on the channel information;
updating a modulation constellation according to a first period, wherein the first modulation constellation is one of modulation constellations that are obtained by updating according to the first period;
updating a modulation constellation at a plurality of time points, wherein the first modulation constellation is one of modulation constellations that are obtained by updating at the plurality of time points;
updating a modulation constellation in case that a first condition is satisfied, wherein the first modulation constellation is an updated modulation constellation in case that the first condition is satisfied.

11. The method according to claim 10, wherein the first condition is that the channel information has been received.

12. The method according to any one of claims 8-11, wherein a first model is deployed on both the first device and the second device, the first model being used to generate the first modulation constellation.

13. The method according to any one of claims 1-7, wherein before performing, by the first device, the signal modulation according to the first modulation constellation, the method further comprises:
sending, by the first device, fourth information to a second device, wherein the fourth information is used to instruct the second device to perform signal demodulation by using the first modulation constellation.

14. The method according to claim 13, wherein a first model is deployed on the first device and the first model is not deployed on the second device, the first model being used to generate the first modulation constellation.

15. The method according to any one of claims 1-7, wherein before performing, by the first device, the signal modulation according to the first modulation constellation, the method further comprises:
receiving, by the first device, fourth information from a second device, wherein the fourth information is used to instruct the first device to perform signal modulation by using the first modulation constellation.

16. The method according to claim 15, wherein a first model is deployed on the second device and the first model is not deployed on the first device, the first model being used to generate the first modulation constellation.

17. The method according to any one of claims 1-16, wherein the channel information comprises one or more of following information:
full channel information;
a measurement metric for representing channel energy or channel quality;
channel state information fed back by a second device.

18. The method according to any one of claims 1-7, wherein the first modulation constellation is a modulation constellation generated after inputting the channel information into the first model.

19. A method for signal demodulation, comprising:
performing, by a second device, signal demodulation according to a first modulation constellation, the first modulation constellation being generated based on channel information.

20. The method according to claim 19, wherein
the first modulation constellation is used to modulate a data stream on one transport layer; or
the first modulation constellation is used to jointly modulate data streams on a plurality of transport layers.

21. The method according to claim 19 or 20, wherein a dimension of the first modulation constellation is greater than or equal to 2.

22. The method according to claim 21, wherein the dimension of the first modulation constellation is equal to 2N, and N represents a number of transport layers.

23. The method according to any one of claims 19-22, wherein
the channel information is used to generate a plurality of modulation constellations, the plurality of modulation constellations comprising the first modulation constellation.

24. The method according to claim 23, further comprising:
receiving, by the second device, first information from a first device, wherein the first information is used to indicate the first modulation constellation.

25. The method according to claim 23, further comprising:
sending, by the second device, first information to a first device, wherein the first information is used to indicate the first modulation constellation.

26. The method according to any one of claims 19-25, wherein before performing, by the second device, the signal demodulation according to the first modulation constellation, the method further comprises:
receiving, by the second device, one or more of following information from a first device:
the channel information;
second information for indicating a first model, wherein the first model is used to generate the first modulation constellation;
third information for triggering the second device to update a modulation constellation, wherein the first modulation constellation belongs to an updated modulation constellation.

27. The method according to any one of claims 19-25, wherein before performing, by the second device, the signal demodulation according to the first modulation constellation, the method further comprises:
sending, by the second device, one or more of following information to a first device:
the channel information;
second information for indicating a first model, wherein the first model is used to generate the first modulation constellation;
third information for triggering the first device to update a modulation constellation, wherein the first modulation constellation belongs to an updated modulation constellation.

28. The method according to claim 26 or 27, wherein the third information is used to trigger one of following operations:
updating a modulation constellation to the first modulation constellation based on the channel information;
updating a modulation constellation according to a first period, wherein the first modulation constellation is one of modulation constellations that are obtained by updating according to the first period;
updating a modulation constellation at a plurality of time points, wherein the first modulation constellation is one of modulation constellations that are obtained by updating at the plurality of time points;
updating a modulation constellation in case that a first condition is satisfied, wherein the first modulation constellation is an updated modulation constellation in case that the first condition is satisfied.

29. The method according to claim 28, wherein the first condition is that the channel information has been received.

30. The method according to any one of claims 26-29, wherein a first model is deployed on both the first device and the second device, the first model being used to generate the first modulation constellation.

31. The method according to any one of claims 19-25, wherein before performing, by the second device, the signal demodulation according to the first modulation constellation, the method further comprises:
receiving, by the second device, fourth information from a first device, wherein the fourth information is used to instruct the second device to perform signal demodulation by using the first modulation constellation.

32. The method according to claim 31, wherein a first model is deployed on the first device and the first model is not deployed on the second device, the first model being used to generate the first modulation constellation.

33. The method according to any one of claims 19-25, wherein before performing, by the second device, the signal demodulation according to the first modulation constellation, the method further comprises:
sending, by the second device, fourth information to a first device, wherein the fourth information is used to instruct the first device to perform signal modulation by using the first modulation constellation.

34. The method according to claim 33, wherein a first model is deployed on the second device and the first model is not deployed on the first device, the first model being used to generate the first modulation constellation.

35. The method according to any one of claims 19-34, wherein the channel information comprises one or more of following information:
full channel information;
a measurement metric for representing channel energy or channel quality;
channel state information fed back by a second device.

36. The method according to any one of claims 19-25, wherein the first modulation constellation is a modulation constellation generated after inputting the channel information into the first model.

37. A communication device, wherein the communication device is a first device, and the communication device comprises:
a modulation module for performing signal modulation according to a first modulation constellation, the first modulation constellation being generated based on channel information.

38. The communication device according to claim 37, wherein
the first modulation constellation is used to modulate a data stream on one transport layer; or
the first modulation constellation is used to jointly modulate data streams on a plurality of transport layers.

39. The communication device according to claim 37 or 38, wherein a dimension of the first modulation constellation is greater than or equal to 2.

40. The communication device according to claim 39, wherein the dimension of the first modulation constellation is equal to 2N, and N represents a number of transport layers.

41. The communication device according to any one of claims 37-40, wherein
the channel information is used to generate a plurality of modulation constellations, the plurality of modulation constellations comprising the first modulation constellation.

42. The communication device according to claim 41, wherein the communication device further comprises:
a first communication module for sending first information to a second device, wherein the first information is used to indicate the first modulation constellation.

43. The communication device according to claim 41, wherein the communication device further comprises:
a second communication module for receiving first information from a second device, wherein the first information is used to indicate the first modulation constellation.

44. The communication device according to any one of claims 37-43, wherein the communication device further comprises:
a third communication module for sending one or more of following information to a second device before the signal modulation based on the first modulation constellation:
the channel information;
second information for indicating a first model, wherein the first model is used to generate the first modulation constellation;
third information for triggering the second device to update a modulation constellation, wherein the first modulation constellation belongs to an updated modulation constellation.

45. The communication device according to any one of claims 37-43, wherein the communication device further comprises:
a fourth communication module for receiving one or more of following information from a second device before the signal modulation based on the first modulation constellation:
the channel information;
second information for indicating a first model, wherein the first model is used to generate the first modulation constellation;
third information for triggering the first device to update a modulation constellation, wherein the first modulation constellation belongs to an updated modulation constellation.

46. The communication device according to claim 44 or 45, wherein the third information is used to trigger one of following operations:
updating a modulation constellation to the first modulation constellation based on the channel information;
updating a modulation constellation according to a first period, wherein the first modulation constellation is one of modulation constellations that are obtained by updating according to the first period;
updating a modulation constellation at a plurality of time points, wherein the first modulation constellation is one of modulation constellations that are obtained by updating at the plurality of time points;
updating a modulation constellation in case that a first condition is satisfied, wherein the first modulation constellation is an updated modulation constellation in case that the first condition is satisfied.

47. The communication device according to claim 46, wherein the first condition is that the channel information has been received.

48. The communication device according to any one of claims 44-47, wherein a first model is deployed on both the first device and the second device, the first model being used to generate the first modulation constellation.

49. The communication device according to any one of claims 37-43, wherein the communication device further comprises:
a fifth communication module for sending fourth information to a second device before the signal modulation based on the first modulation constellation, wherein the fourth information is used to instruct the second device to perform signal demodulation by using the first modulation constellation.

50. The communication device according to claim 49, wherein a first model is deployed on the first device and the first model is not deployed on the second device, the first model being used to generate the first modulation constellation.

51. The communication device according to any one of claims 37-43, wherein the communication device further comprises:
a sixth communication module for receiving fourth information from a second device before the signal modulation based on the first modulation constellation, wherein the fourth information is used to instruct the first device to perform signal modulation by using the first modulation constellation.

52. The communication device according to claim 51, wherein a first model is deployed on the second device, the first model is not deployed on the first device, and the first model is used to generate the first modulation constellation.

53. The communication device according to any one of claims 37-52, wherein the channel information comprises one or more of following information:
full channel information;
a measurement metric for representing channel energy or channel quality;
channel state information fed back by a second device.

54. The communication device according to any one of claims 37-43, wherein the first modulation constellation is a modulation constellation generated after inputting the channel information into the first model.

55. A communication device, wherein the communication device is a second device, and the communication device comprises:
a demodulation module for performing signal demodulation according to a first modulation constellation, the first modulation constellation being generated based on channel information.

56. The communication device according to claim 55, wherein
the first modulation constellation is used to modulate a data stream on one transport layer; or
the first modulation constellation is used to jointly modulate data streams on a plurality of transport layers.

57. The communication device according to claim 55 or 56, wherein a dimension of the first modulation constellation is greater than or equal to 2.

58. The communication device according to claim 57, wherein the dimension of the first modulation constellation is equal to 2N, and N represents a number of transport layers.

59. The communication device according to any one of claims 55-58, wherein
the channel information is used to generate a plurality of modulation constellations, the plurality of modulation constellations comprising the first modulation constellation.

60. The communication device according to claim 59, wherein the communication device further comprises:
a first communication module for receiving first information from a first device, wherein the first information is used to indicate the first modulation constellation.

61. The communication device according to claim 59, wherein the communication device further comprises:
a second communication module for sending first information to a first device, wherein the first information is used to indicate the first modulation constellation.

62. The communication device according to any one of claims 55-61, wherein the communication device further comprises:
a third communication module for receiving one or more of following information from a first device before the signal demodulation based on the first modulation constellation:
the channel information;
second information for indicating a first model, wherein the first model is used to generate the first modulation constellation;
third information for triggering the second device to update a modulation constellation, wherein the first modulation constellation belongs to an updated modulation constellation.

63. The communication device according to any one of claims 55-61, wherein the communication device further comprises:
a fourth communication module for sending one or more of following information to a first device before the signal demodulation based on the first modulation constellation:
the channel information;
second information for indicating a first model, wherein the first model is used to generate the first modulation constellation;
third information for triggering the first device to update a modulation constellation, wherein the first modulation constellation belongs to an updated modulation constellation.

64. The communication device according to claim 62 or 63, wherein the third information is used to trigger one of following operations:
updating a modulation constellation to the first modulation constellation based on the channel information;
updating a modulation constellation according to a first period, wherein the first modulation constellation is one of modulation constellations that are obtained by updating according to the first period;
updating a modulation constellation at a plurality of time points, wherein the first modulation constellation is one of modulation constellations that are obtained by updating at the plurality of time points;
updating a modulation constellation in case that a first condition is satisfied, wherein the first modulation constellation is an updated modulation constellation in case that the first condition is satisfied.

65. The communication device according to claim 64, wherein the first condition is that the channel information has been received.

66. The communication device according to any one of claims 62-65, wherein a first model is deployed on both the first device and the second device, the first model being used to generate the first modulation constellation.

67. The communication device according to any one of claims 55-61, wherein the communication device further comprises:
a fifth communication module for receiving fourth information from a first device before the signal demodulation based on the first modulation constellation, wherein the fourth information is used to instruct the second device to perform signal demodulation by using the first modulation constellation.

68. The communication device according to claim 67, wherein a first model is deployed on the first device and the first model is not deployed on the second device, the first model being used to generate the first modulation constellation.

69. The communication device according to any one of claims 55-61, wherein the communication device further comprises:
a sixth communication module for sending fourth information to a first device before the signal demodulation based on the first modulation constellation, wherein the fourth information is used to instruct the first device to perform signal modulation by using the first modulation constellation.

70. The communication device according to claim 69, wherein a first model is deployed on the second device, the first model is not deployed on the first device, and the first model is used to generate the first modulation constellation.

71. The communication device according to any one of claims 55-70, wherein the channel information comprises one or more of following information:
full channel information;
a measurement metric for representing channel energy or channel quality;
channel state information fed back by a second device.

72. The communication device according to any one of claims 55-61, wherein the first modulation constellation is a modulation constellation generated after inputting the channel information into the first model.

73. A communication device, comprising: a transceiver, a memory and a processor, wherein the memory is used to store a program, and the processor is used to call the program in the memory and control the transceiver to receive or send a signal, to cause the communication device to perform the method of any one of claims 1-18 or the method of any one of claims 19-36.

74. An apparatus, comprising a processor, wherein the processor is used for calling a program from a memory, to cause the apparatus to perform the method of any one of claims 1-18 or the method of any one of claims 19-36.

75. A chip, comprising a processor, wherein the processor is used for calling a program from a memory, to cause a device on which the chip is mounted to perform the method of any one of claims 1-18 or the method of any one of claims 19-36.

76. A computer readable storage medium, having stored thereon a program that causes a computer to perform the method of any one of claims 1-18 or the method of any one of claims 19-36.

77. A computer program product, comprising a program that causes a computer to perform the method of any one of claims 1-18 or the method of any one of claims 19-36.

78. A computer program, causing a computer to perform the method of any one of claims 1-18 or the method of any one of claims 19-36.
